# EUROPEAN PATENT APPLICATION

(11) **EP 1 213 640 A2**
(43) Date of publication of application: **12.06.2002**
(21) Application number: 01309232.5
(22) Date of filing: 31.10.2001
(51) Int. Cl.: G06F 1/16

(54) **Apparatus for opening hand held electronic device**

(30) Priority: 08.12.2000 US 733146
(71) Applicant: Nokia Corporation, 02150 Espoo (FI)
(72) Inventor: Savolainen, Perti, 24800 Halikko (FI); Kauhamieni, Ilpo, 01660 Vantaa (FI); Suutari, Jari, 24800 Halikko (FI); Kim, Su-Jung, 24100 Salo (FI); Aaltonen, Antero, 24100 Salo (FI); Ronkko, Antti, 02210 Espoo (FI); Rouvinen, Jarkko, 02340 Espoo (FI); Kosonen, Matti, 00440 Helsinki (FI)
(74) Representative: Read, Matthew Charles

(57) **Abstract**

A hinge is constructed for automatically opening the cover panel of an electronic device. The hinge assembly includes a torsion bar on which is concentrically mounted a series of cylindrical barrels. The torsion bar is fixed to the base of the device at one end and to the cover at its other end in such a manner that the torsion acts as spring which is loaded by the closing rotation of the cover. The cover is opened by releasing the loaded torsion bar and allowing the cover to rotate to its open position. Viscous damping is provided to control the rotation of the cover support barrel.

## Description

### Background of the Invention

Mobile telephones and similar communication devices are rapidly expanding in use and function. Such devices will soon provide Internet access, personal information management, facsimile, and messaging, in addition to telephone communication. This will require a user interface which is more complex, crowded and generally more difficult to use. In addition, electronic devices, such as mobile phones, pagers and the like, are being used in ever expanding situations and environments. With the complexity of use, a cover is generally used to protect against inadvertent actuation of the user interface and to provide additional functionality such as a display. The user interface, i.e. keyboard and display, remain covered when not in use. The cover therefore must be opened in order to allow use of the device. Covered keyboards and displays often require awkward manual maneuvers using two hands, to properly complete the opening of the device and adjust the relative position of the components. A mechanism is needed to easily open such covers with one hand. The movement of the cover must be well defined and accurate without allowing partial opening which defeats the single handed purpose. In the same instance, the motion cannot be unnecessarily jarring to the holder. In situations where the cover contains the display a considerable weight of about 50 grams may be involved and this requires a robust hinge mechanism.

It is a purpose of this invention to provide a simple and efficient mechanism for opening an electronic device. It is also a purpose of this invention to make a hinge opening mechanism that is compact and that allows electrical contact through the hinge. It is a purpose of this invention to provide an opening motion which will be damped to allow an accurate and automatic opening of the device to a predetermined position, ready for use. It is a purpose of this invention to provide a robust hinge while minimizing diameter.

### Summary of the Invention

The mechanism of this invention involves a hinge structure for connecting two generally flat panels for relative rotation about an axis. The panels form part of a handheld electronic device, for example, a mobile phone, pager, personal information manager or the like. These devices typically have a user interface which includes a keyboard and a display panel. The two panels must be movable between two positions, one at which the user interface is enclosed, inoperable and protected and another at which the components of the user interface are opened to operational position. The movement of the two panels is automatic and controlled to allow actuation using one hand.

The hinge is constructed in an assembly of barrel shaped cylindrical components appropriately connected to each of the panels to provide the required motion. A torsion bar spring provides the energy for opening the panels and is biased in the open position. The spring is energized by the closing motion of the panels and released to provide the opening torque. The torsion bar spring is an elongated wire shaped member mounted at the axis of the hinge. A series of cylindrical barrels are mounted concentric with the torsion spring and form a connection across the hinge from one panel to the other.

The torsion bar spring is fixed at one of its ends to the base panel and at its other end to the cover. The spring is chosen and mounted to provide a torque to the cover and is therefore free to rotate at the end to which the cover is fixed. The connection to the base panel is provided through a base coupling barrel which is constructed with a spring release mechanism actuatable by the user to release the spring torque and cause the cover to swing to its open position. A damper barrel is mounted concentrically over the torsion spring and is fixed to the base coupling barrel. A cover support barrel is in turn mounted concentrically over the damping barrel and is free to rotate on the damping barrel, but is fixed to the rotating end of the torsion spring. A pair of O-rings are mounted on the circumference of the damping barrel to form a chamber with the interior bore of the cover support barrel. This chamber may be filled with a viscous fluid to provide a damping friction for the movement of the cover support barrel. The cover support barrel has a cover coupling barrel which provides releasable engagement with the base coupling barrel.

In an alternate embodiment, the release mechanism is removed to simplify the hinge assembly. In addition the connection to the cover is made through a friction coupling which permits additional rotation of the cover. The base is connected to the torsion spring through a support barrel within which a damping chamber is formed.

### Description of the Drawing

The invention is described in more detail below with reference to the attached drawing in which:
Figure 1 is an exploded view of the hinge of this invention;
Figure 2 is a sectional view of the release mechanism of this invention;
Figure 3 is an exploded view of a alternate embodiment of this invention;
Figure 4 is an exploded perspective view of a friction coupling used in the alternate embodiment of figure 3; and
Figure 5 is a perspective view of the electrical connector between the base and the display.

### Description of the Preferred Embodiment

The panel opening hinge 30 of this invention is described below with reference to a personal information manager having a base panel 1 in which is mounted a keyboard 3 and a cover panel 2 in which is mounted a display 4, but it should be noted that the system is equally adaptable to other types of electronic devices such as, computers, pagers, game controllers and the like.

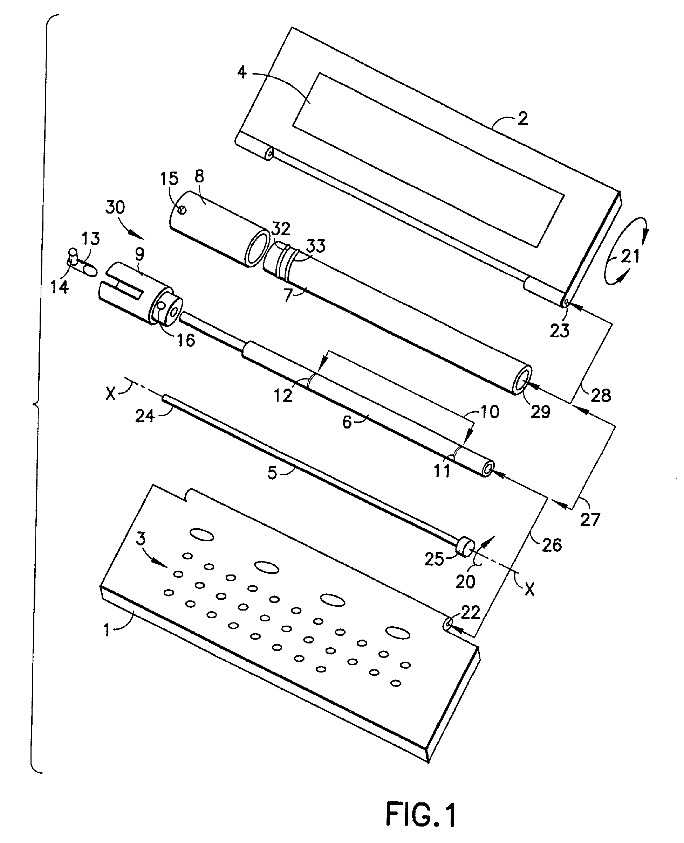

The components of the hinge mechanism 30 of this invention are shown in disassembled relation in figure 1. For convenience of illustration the hinge assembly 30 is enlarged with respect to the panels. Panels 1 and 2 are connected by the hinge mechanism through aligned bores 22 and 23 to allow movement of the cover panel 2 relative to the base panel 1 in the direction of arrow 21 about the axis x-x. The cover panel 2 is allowed to move between a closed position at which it covers keyboard 3 and an open position at which the display 4 is visible and keyboard 4 is easily accessed. The total relative movement between the panels 1 and 2 is through an obtuse angle of about 135°.

The movement of the cover 2 is provided through torsion bar 5 which is fixed at end 24 to the base panel 1 and at its other end 25 to cover panel 2 through damping barrel 6, cover support barrel 7, and cover coupling barrel 8, as described below. The torsion bar 5 will act as a spring which is charged by the closing movement of the cover panel 2 and releases when actuated by the user. End 25 of the torsion bar 5 is free to rotate (within a 135° range, while end 24 is fixed. This forces the bar 5 to twist during the closing motion of cover 2. Torsion bar 5 is constructed of an appropriate material that has a torsional elasticity which will return the bar 5 to its untwisted position. In the preferred embodiment torsion bar 5 is constructed of superelastic nickel/titanium alloy wire, such as is sold under the trademark NITINOL by Nitinol Devices & Components of Fremont, CA. The superelasticity of this material combines to provide a spring of extremely compact form which has sufficient spring torque to open the display panel 2 and a suitable durability. A torsion bar having a diameter of .84mm and a length of 50mm has been used with good results.

The torsion bar 5 forms the axially aligned base of the hinge assembly 30. The other parts of hinge 30 are cylindrical barrels which are assembled concentrically around the torsion bar 5. As shown by assembly bracket 26, base 1 is mounted on torsion bar 5 through damping barrel 6 and is fixed to end 24 of torsion bar 5 through a base coupling barrel 9. Base coupling barrel 9 contains the release mechanism 31. Assembly reference bracket 27 is used to indicate that a cover support barrel 7 is also mounted on torsion bar 5, but over damping barrel 6. Cover support barrel 7 is fixed to end 25 of the torsion bar 5 and supports the cover panel 2. A cover coupling barrel 8 is fixed to one end of the cover support barrel 7 and engages the release mechanism 31 to hold the cover in the closed position.

Damping barrel 6 is constructed with a pair of O-rings 11 and 12 mounted on its periphery. O-rings 11 and 12 form a damping chamber 10 in cooperation with the interior surface of bore 29 of cover support barrel 7. An appropriate grease can be confined within the chamber 10 to function as a viscous damping fluid. The friction between the cover support barrel 7 and damping barrel 6 during relative rotation of these members, creates a damping torque which controls the movement of the panel 2 under the influence of torsion bar 5.

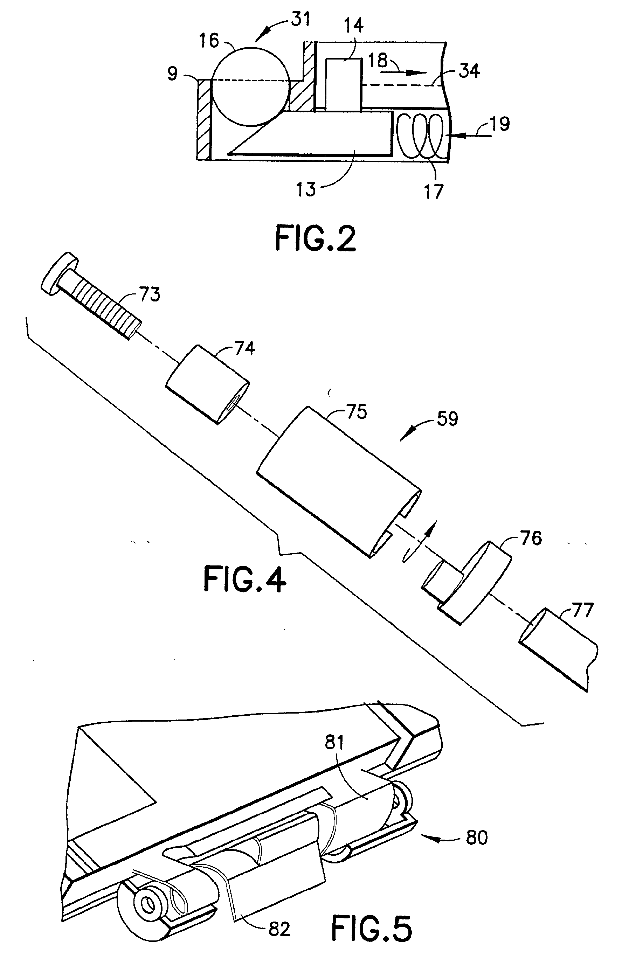

In one embodiment of the invention, as shown in figure 2, the release mechanism 31 of the hinge assembly consists of a ball detent 16 mounted on a peripheral surface of base coupling barrel 9. Ball detent 16 is biased in the protruding position, as shown in figure 2, by a wedge shaped member 13. A spring 17 is positioned to exert a force on the wedge 13 in the direction shown by arrow 19. An actuating mechanism is connected through flange 14 of wedge member 13 to exert a release force in the direction shown by arrow 18 against spring 17. Preferably the actuation is accomplished by a button mounted on the axis of the hinge 31 and causing a force 18 to be exerted through an appropriate linkage. In a preferred embodiment, a shape memory wire is used, (also available from NDC of Fremont, CA) to actuate the spring detent release mechanism 31. To accomplish this a memory_wire 34 is connected to flange 14 as shown by a phantom line, in figure 2. The memory shape wire will contract under the influence of heat and move the wedge 13 against spring 17. Heat is provided by connecting the memory wire to a source of current such as a battery (not shown). The release mechanism of this embodiment will be actuated by pressing a button (not shown) to energize the memory wire. This allows the release button to be positioned in a more convenient position.

Cover coupling barrel 8 is constructed with a cylindrical opening 15 which will engage ball detent 16 to lock the cover 2 is in the closed position. Cover coupling barrel 8 is mounted on cover support barrel 7 and may be allowed to rotate through a sector of 45° relative to barrel 7. This allows movement of the cover relative to the base to allow adjustment of the position of the cover beyond the 135° angle otherwise provided. This extra movement is needed to accommodate accidentally forced extension or more customized positioning of the display. To hold the cover in place, the torsion bar 5 is not totally released at the 135° angle. A residual spring torque is maintained amounting to approximately a 30° rotation. Closing the cover recharges the spring torque to its opening energy.

A pair of O-rings 32 and 33 may be mounted on the outer surface of barrel 7 to provide a friction damping torque for the relative motion of coupling barrel 8 on cover support barrel 7.

In operation of the hinge of figure 1, the torsion spring 5 is twisted by the closing motion of cover 2. This generates a torque which is restrained by release mechanism 31, as ball detent 16 of base coupling barrel 9 engages opening 15 of cover coupling barrel 8. By retracting wedge element 13 from engagement with ball detent 16, the stored torque of torsion bar is released. Since cover support barrel 7 is free to rotate on damping barrel 6 and is fixed to the free end 25 of torsion bar 5, cover 2 will automatically open under the influence of viscous damping provided by the damping chamber 10.

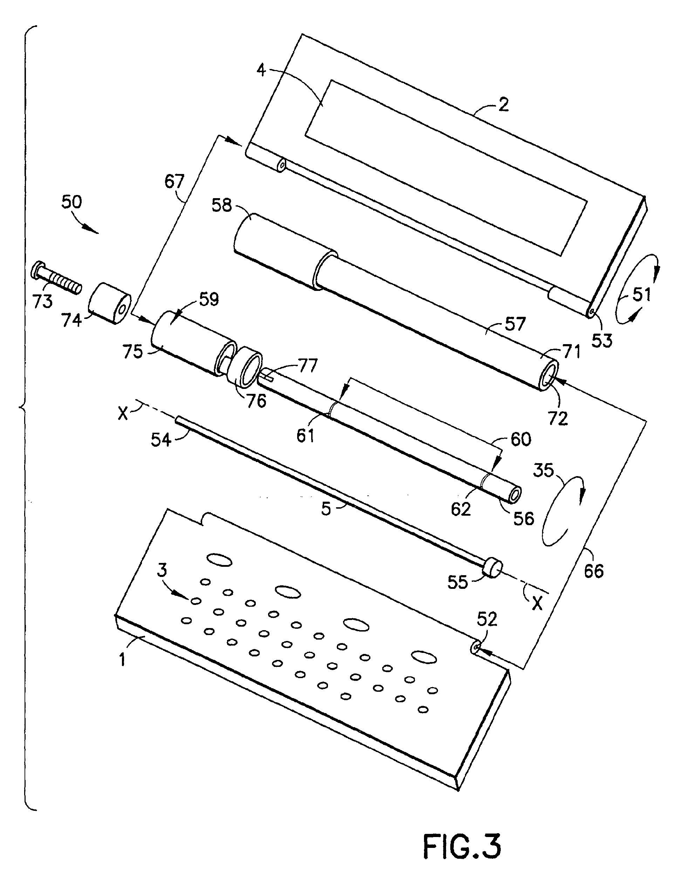

An alternate embodiment of the invention is shown in figures 3 and 4. In this embodiment a hinge assembly 50 is shown which is simplified by removing the release mechanism from the hinge assembly.

The components of the hinge mechanism are shown in disassembled relation in figure 3. For convenience of illustration the hinge assembly 50 is enlarged with respect to the panels. Panels 1 and 2 are connected by the hinge mechanism 50 through aligned bores 52 and 53 to allow movement of the cover panel 2 relative to the base panel 1 in the direction of arrow 51 about the axis x-x. The cover panel 2 is allowed to move between a closed position at which it covers keyboard 3 and an open position at which the display 4 is visible and keyboard 4 is easily accessed. The total relative movement between the panels 1 and 2 is through an obtuse angle of about 135°.

The movement of the cover 2 is provided through torsion bar 5 which is fixed at end 54 to cover panel 2 through damping barrel 6, and friction coupling barrel 59, as described below. End 55 of torsion bar 5 is connected to the base 1 through end 71 of support barrel 57. Opposite end 58 of support barrel 57 is fixed to base 1. The torsion bar 5 will act as a spring which is charged by the closing movement of the cover panel 2 and releases when actuated by the user. End 54 of the torsion bar 5 is free to rotate, while end 55 is relatively fixed. This forces the bar 5 to twist during the closing motion of cover 2. Torsion bar 5 is constructed of an appropriate superelastic material as described above.

The torsion bar 5 forms the axially aligned base of the hinge assembly 50. The other parts of hinge 50 are cylindrical barrels which are assembled concentrically around the torsion bar 5. As shown by assembly bracket 66, base 1 supports torsion bar 5 through support barrel 57 and is fixed to end 55 of torsion bar 5. Assembly reference bracket 67 is used to indicate that damping barrel 56 is also mounted on torsion bar 5, through internal bore 72 of support barrel 57. As shown in figure 3, damping barrel 56 is connected through friction coupling barrel 59 to the cover 2. Key 78 engages the damping barrel 56 to allow limited relative rotation between the damping barrel 56 and torsion bar 5 in the amount of 135°, as shown by arrow 35.

As in the embodiment of figure 1, damping barrel 56 is constructed with a pair of O-rings 61 and 62 mounted on its periphery. O-rings 61 and 62 form a damping chamber 60 in cooperation with the interior surface of bore 72 of support barrel 57. An appropriate grease can be confined within the chamber 60 to function as a viscous damping fluid. The friction between the support barrel 57 and damping barrel 56 during relative rotation of these members, creates a damping force which controls the movement of the panel 2 under the influence of torsion bar 5.

As shown in figure 4, friction coupling barrel 59 is mounted for limited rotation on damping barrel 56. Coupling 59 is constructed of a series of cylindrical elements which include friction ring 74, body 75, and coupling ring 76. Body 75 is mounted on end 77 of damping barrel 56 through friction ring 74. Coupling ring 76 engages body 75 to allow limited rotation between damping barrel 56 and coupling barrel 59 in the amount of approximately 45°. This provides a safety measure for accidental extension of the cover or for customized adjustment. The friction between coupling barrel 59 and damping barrel 56 may be adjusted by the operation of screw 73 which engages a threaded hole in split end 77 of damping barrel 56. By rotation of the screw the split end 77 may be selectively enlarged or reduced to provide more or less coupling friction as desired, through engagement with friction ring 74.

The operation of the embodiment of figure 3 is similar to hinge assembly 30 described above. Torsion spring 5 is twisted by the closing motion of cover 2. This generates a torque which is restrained by an appropriate release mechanism which, when actuated releases the stored energy of the torsion bar and opens the cover. Since damping support barrel 56 is free to rotate up to 135° on torsion bar 5, cover 2 will open under the influence of viscous damping provided by the damping chamber 60.

In the embodiment of figure 3, a hook or clasp type mechanism can be employed to hold the cover 2 in the restrained, closed position, while allowing release through one handed operation.

Figure 5 shows a mechanism 80 for connecting the display 2 to the main printed circuit board of the device. The configuration of the hinge assemblies of this invention, because of the small diameter hinge, facilitate the use of a flexible coiled plastic member 81 in which is imbedded wires (not shown) connected to display 2. The connection flap 82 contains the terminal ends of the wires which are inserted in base 2 for connection to the main printed circuit board. The mechanism 80 is coiled internally within the bore of the electronic device which also accommodates hinge mechanisms 30 or 50.

## Claims

1. A hinge assembly for mounting a pair of substantially flat panels of an electronic device and providing a torque for rotating the panels between open and closed positions about an axis comprising:
an elongated torsion bar spring supported on the panels at said axis of rotation and having first and second ends, said first end being fixed to one of said pairs of panels and said second end connected to said other of said pair of panels, wherein rotation of said panels from the open position to the closed position generates a torsional load on said torsion bar spring;
a first cylindrical barrel mounted concentrically on said torsion bar and connected to one of said pair of panels; and
a second cylindrical barrel mounted concentrically on said first cylindrical barrel for rotation thereon and connected to support the other of said pair of panels.

2. A hinge assembly for mounting a pair of substantially flat panels of an electronic device and providing a torque for rotating the panels between open and closed positions about an axis, as described in claim 1, further comprising a coupling releasably constraining said other of said pair of panels in the closed position against the torque of the loaded torsion bar spring.

3. A hinge assembly for mounting a pair of substantially flat panels of an electronic device and providing a torque for rotating the panels between open and closed positions about an axis, as described in claim 2, further comprising an actuator for releasing said other of said pair of panels to allow rotation of said other of said pair of panels to its open position under the torque of the torsion bar spring.

4. A hinge assembly for mounting a pair of substantially flat panels of an electronic device and providing a torque for rotating the panels between open and closed positions about an axis, as described in claim 1, wherein said rotation of said second barrel on said first barrel is subject to viscous damping.

5. A hinge assembly for mounting a pair of substantially flat panels of an electronic device and providing a torque for rotating the panels between open and closed positions about an axis, as described in claim 4, wherein said first barrel is constructed having a pair of O-rings mounted on the outer periphery thereof and said second barrel is constructed having an axially aligned bore to receive said first barrel therein and form a damping chamber for containing a viscous fluid in cooperation with said O-rings.

6. A hinge assembly for mounting a pair of substantially flat panels of an electronic device and providing a torque for rotating the panels between open and closed positions about an axis, as described in claim 1, wherein said torsion bar spring is constructed of a superelastic nickel/titanium alloy wire.

7. A hinge assembly for mounting a pair of substantially flat panels of an electronic device and providing a torque for rotating the panels between open and closed positions about an axis, as described in claim 1, wherein the coupling comprises:
a first coupling barrel fixed to said first cylindrical barrel, said first coupling barrel having a locking latch constructed thereon; and
a second coupling barrel mounted on said second cylindrical barrel for rotary motion therewith, said second coupling barrel having means to engage said locking latch to maintain the pair of panels in their closed position, wherein an actuator operates to unlatch said first and second coupling barrels.

8. A hinge assembly for mounting a pair of substantially flat panels of an electronic device and providing a torque for rotating the panels between open and closed positions about an axis, as described in claim 7, wherein the latch comprises a ball detent which is spring biased into an extended position and wherein said means of engaging comprises an opening for receiving said extended ball detent, and said actuator is a manual button which retracts said extended ball detent against its biasing spring to cause the ball detent to withdraw from its extended position.

9. A hinge assembly for mounting a pair of substantially flat panels of an electronic device and providing a torque for rotating the panels between open and closed positions about an axis, as described in claim 7, wherein said actuator is operated by means of a shape memory wire, said memory wire being caused to contract when heated and unlatch said coupling barrels.

10. A hinge assembly for mounting a pair of substantially flat panels of an electronic device and providing a torque for rotating the panels between open and closed positions about an axis, as described in claim 1, wherein an electrical connection is formed between said panels and connection comprises a coiled plastic sheet positioned within the hinge to allow rotation of the hinge components, said coiled plastic sheet having connecting wires impeded therein to form an electrical connection across said hinge.

11. An electronic device having a display and base, said base containing a user interface, a control processor, and a source of power, said electronic device comprising:
a first panel containing said display;
a second panel containing said user interface, said control processor, and said source of power;
a hinge assembly for connecting said first and second panels for relative rotation of one of said panels with respect to the other of said panels between open and closed positions about an axis, said hinge assembly further comprising:
an elongated torsion bar spring supported on the panels at said axis of rotation and having first and second ends, said first end being fixed to one of said panels and said second end connected to said other of said panels, wherein rotation of said panels from the open position to the closed position generates a torsional load on said torsion bar spring;
a first cylindrical barrel mounted concentrically on said torsion bar and connected to one of said panels; and
a second cylindrical barrel mounted concentrically on said first cylindrical barrel for rotation thereon and connected to support the other of said panels.

12. An electronic device having a display and base, said base containing a user interface, a control processor, and a source of power, said electronic device, as described in claim 11, further comprising a coupling releasably constraining said other of said pair of panels in the closed position against the torque of the loaded torsion bar spring.

13. An electronic device having a display and base, said base containing a user interface, a control processor, and a source of power, said electronic device, as described in claim 12, further comprising an actuator for releasing said other of said panels to allow rotation of said other of said panels to its open position under the torque of the torsion bar spring.

14. An electronic device having a display and base, said base containing a user interface, a control processor, and a source of power, said electronic device, as described in claim 11, wherein said rotation of said second barrel on said first barrel is subject to viscous damping.

15. An electronic device having a display and base, said base containing a user interface, a control processor, and a source of power, said electronic device, as described in claim 14, wherein said first barrel is constructed having a pair of O-rings mounted on the outer periphery thereof and said second barrel is constructed having an axially aligned bore to receive said first barrel therein and form a damping chamber for containing a viscous fluid in cooperation with said O-rings.

16. An electronic device having a display and base, said base containing a user interface, a control processor, and a source of power, said electronic device, as described in claim 11, wherein said torsion bar spring is constructed of a superelastic nickel/titanium alloy wire.

17. An electronic device having a display and base, said base containing a user interface, a control processor, and a source of power, said electronic device, as described in claim 12, wherein the coupling comprises:
a first coupling barrel fixed to said first cylindrical barrel, said first coupling barrel having a locking latch constructed thereon; and
a second coupling barrel mounted on said second cylindrical barrel for rotary motion therewith, said second coupling barrel having means to engage said locking latch to maintain said panels in their closed position, wherein an actuator operates to unlatch said first and second coupling barrels.

18. An electronic device having a display and base, said base containing a user interface, a control processor, and a source of power, said electronic device, as described in claim 17, wherein the latch comprises a ball detent which is spring biased into an extended position and wherein said means of engaging comprises an opening for receiving said extended ball detent, and said actuator is a manual button which retracts said extended ball detent against its biasing spring to cause the ball detent to withdraw from its extended position.

19. A hinge assembly for mounting a pair of substantially flat panels of an electronic device and providing a torque for rotating said panels between open and closed positions about an axis, as described in claim 17, wherein said actuator is operated by means of a shaped memory wire, said memory wire being caused to contract when heated and unlatch said coupling barrels.

20. An electronic device having a display and base, said base containing a user interface, a control processor, and a source of power, said electronic device, as described in claim 11, wherein an electrical connection is formed between said panels and connection comprises a coiled plastic sheet positioned within the hinge to allow rotation of the hinge components, said coiled plastic sheet having connecting wires impeded therein to form an electrical connection across said hinge.
